(19) Europäisches Patentamt
European Patent Office
Office européen des brevets

(11) **EP 2 100 196 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **07819047.7**

(22) Anmeldetag: **17.10.2007**

(51) Int Cl.:
*G05B 11/42* (2006.01)       *G05B 13/02* (2006.01)
*G05D 3/14* (2006.01)

(86) Internationale Anmeldenummer:
**PCT/EP2007/008979**

(87) Internationale Veröffentlichungsnummer:
**WO 2008/064740 (05.06.2008 Gazette 2008/23)**

(54) **VERFAHREN ZUM ANPASSEN VON REGLERPARAMETERN EINES ANTRIEBS AN UNTERSCHIEDLICHE BETRIEBSZUSTÄNDE**

METHOD FOR THE ADAPTATION OF THE CONTROL PARAMETERS OF A DRIVE CONTROLLER TO CHANGED OPERATING CONDITIONS

PROCÉDÉ POUR ADAPTER DES PARAMÈTRES DE RÉGLAGE D'UN ENTRAÎNEMENT À DIFFÉRENTS ÉTATS DE FONCTIONNEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.12.2006 DE 102006056902**

(43) Veröffentlichungstag der Anmeldung:
**16.09.2009 Patentblatt 2009/38**

(73) Patentinhaber: **ETEL S. A..**
**2112 Môtiers (CH)**

(72) Erfinder:
• **VAUCHER, Jean-Marc**
**2108 Couvet (CH)**
• **BURRI, Pierre-Alain**
**2400 Le Locle (CH)**

(74) Vertreter: **Pleyer, Hans Anno**
**Dr. Johannes Heidenhain GmbH**
**Patentabteilung**
**Postfach 12 60**
**83292 Traunreut (DE)**

(56) Entgegenhaltungen:
**EP-A- 0 728 929      WO-A-92/14196**
**US-A- 5 006 770      US-A1- 2002 144 163**

• **CHIN-WEN CHUANG ET AL: "Applying experienced self-tuning PID control to position control of slider crank mechanisms" POWER ELECTRONICS, ELECTRICAL DRIVES, AUTOMATION AND MOTION, 2006. SPEEDAM 2006. INTERNATIONAL SYMPOSIUM ON TAORMINA, ITALY MAY, 23RD - 26TH, 2006, PISCATAWAY, NJ, USA,IEEE, Mai 2006 (2006-05), Seiten 652-657, XP010924571 ISBN: 1-4244-0193-3**

**Beschreibung**

Die Erfindung betrifft ein Verfahren zum Anpassen von Reglerparametern eines Antriebs an unterschiedliche Betriebszustände. Solche Verfahren werden im Bereich der Antriebstechnik eingesetzt, um möglichst unabhängig vom jeweiligen Betriebszustand des Antriebs stets eine möglichst optimale Stabilität und Regelgüte zu erhalten.

Im Bereich der Regelungstechnik sind zum genauen Positionieren mittels elektrischen Antrieben PID - Regler als Lageregler bekannt. Die Parametrierung solcher PID - Regler ist mitunter nicht einfach, insbesondere dann, wenn sehr unterschiedliche Betriebszustände auftreten. Vom Betriebszustand abhängiges Verhalten des zu regelnden Systems aufgrund von Nichtlinearitäten machen es unmöglich, einen Parametersatz zu finden, der in jedem Betriebszustand hinsichtlich der Regelgüte und der Stabilität der kompletten Reglerstruktur optimal ist.

So sorgen Sättigungseffekte dafür, dass die Bandbreite eines Stromreglers bei hohen Strömen schlechter ist als bei niedrigen Strömen. Bei besonders kleinen Geschwindigkeiten können außerdem Reibungseffekte (Stick-Slip-Effekt) in einem zu regelnden System auftreten, die bei höheren Geschwindigkeiten, in deren Bereich nur noch Gleitreibung vorherrscht, keine Rolle spielen.

Es ist bereits bekannt, Verstärkungsfaktoren in Regelkreisen an unterschiedliche Betriebszustände anzupassen. In der US 5006770 ist ein Geschwindigkeitsregler mit PI - Struktur offenbart, dessen I-Verstärkungsfaktor umgekehrt proportional zur jeweiligen Geschwindigkeit eingestellt wird, um Reibungseffekte zu kompensieren. Als Lageregler ist eine solche PI - Struktur aber wenig geeignet, zudem können Sättigungseffekte nicht kompensiert werden.

Des weiteren offenbart die EP 0728929 ein Verfahren gemäß dem Oberbegriff des Anspruchs 1.

Aufgabe der Erfindung ist es, ein Verfahren zum Anpassen von Reglerparametern eines Antriebs an unterschiedliche Betriebszustände zu schaffen, mit dem unabhängig vom Betriebszustand des Antriebs eine möglichst optimale Regelung des Antriebs möglich ist.

Diese Aufgabe wird gelöst durch ein Verfahren mit den Merkmalen des Anspruches 1. Vorteilhafte Ausführungsformen ergeben sich aus den Merkmalen, die in den von Anspruch 1 abhängigen Ansprüchen aufgeführt sind.

Es wird ein Verfahren zum Anpassen von Reglerparametern eines Antriebs an unterschiedliche Betriebszustände beschrieben. Der Regelkreis des Antriebs enthält einen PID - Regler, dessen I-Verstärkungsfaktor an eine Antriebsgeschwindigkeit angepasst wird, und dessen D-Verstärkungsfaktor an einen Antriebsstrom und damit an eine Antriebslast angepasst wird.

In einer Parametrierungseinheit, die zum Anpassen der beiden Verstärkungsfaktoren im PID - Regler dient, durchlaufen die Antriebsgeschwindigkeit und der Antriebsstrom einen Absolutwertbildner und einen Filter zweiter Ordnung, bevor den so gebildeten Beträgen in einer Zuordnungseinheit jeweils passende Verstärkungsfaktoren zugeordnet und dann im PID - Regler verwendet werden.

Mit diesem Verfahren ist es möglich, die Reglerparameter an unterschiedliche Betriebszustände hinsichtlich der Antriebsgeschwindigkeit und des Antriebsstromes anzupassen.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 1    Einen Regelkreis mit einem PID - Regler,

Figur 2    die Übertragungsfunktion des PID - Reglers,

Figur 3    Bestandteile der Parametrierungseinheit,

Figur 4    die Abhängigkeit des I-Verstärkungsfaktors von der Antriebsgeschwindigkeit, und

Figur 5    die Abhängigkeit des D-Verstärkungsfaktors vom Antriebsstrom.

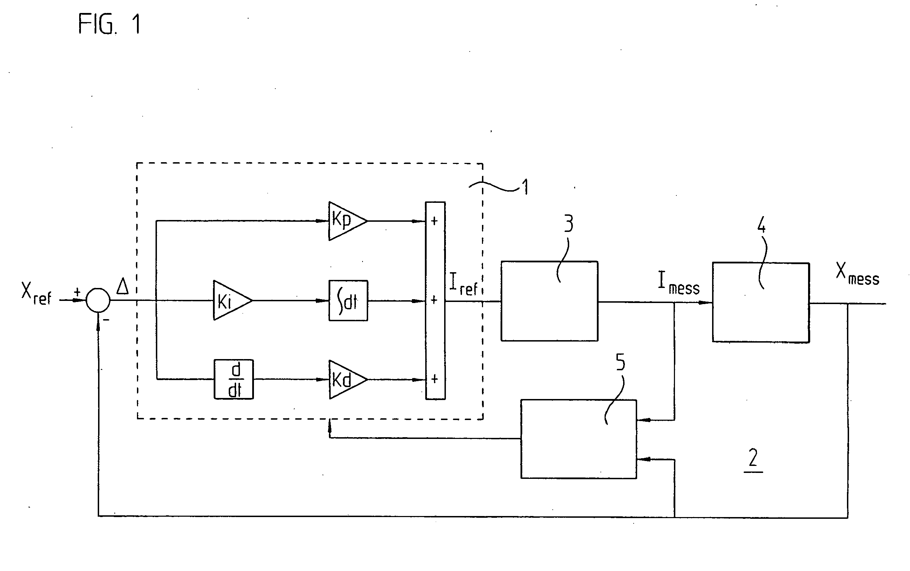

Figur 1 zeigt das Schaltbild einer Antriebslösung mit einem Regelkreis 2. Dieser enthält einen als PID - Regler 1 ausgebildeten Lageregler, an dessen Eingang eine Lageabweichung $\Delta$ anliegt, die aus der Differenz eines Lagesollwerts Xref und eines Lageistwerts Xmess gebildet ist. Der PID - Regler 1 bildet aus der Lageabweichung $\Delta$ einen Sollstrom Iref, der einem Stromregelkreis 3 zugeführt wird. Dieser Stromregelkreis 3 enthält einen Stromregler, einen nach dem PWM - Verfahren betriebenen Leistungsverstärker, ein Strommessgerät und die Spulen eines Motors. Solche Stromregelkreise sind aus dem Stand der Technik bekannt. Durch den Stromregelkreis 3 wird dafür gesorgt, dass im Motor der Strom fließt, der nötig ist, um der Lageabweichung $\Delta$ entgegen zu wirken. Die Einheit 4 fasst die Mechanik der Antriebslösung zusammen: Neben dem Motor und einer Umsetzmechanik wie z.B. einer Welle enthält die Einheit 4 auch einen Positionswertgeber, der den Lageistwert Xmess abgibt. Dieser Lageistwert Xmess wird auf den Differenzbildner am Eingang des PID - Reglers 1 zurückgeführt. Der Regelkreis 2 wird dadurch geschlossen.

Der im Stromregelkreis 3 gemessene Antriebsstrom Imess (gemeint ist natürlich der Messwert, der die Größe des Antriebsstromes angibt) und der Lageistwert Xmess werden außerdem einer Parametrierungseinheit 5 zugeführt, deren Aufgabe weiter unten näher erläutert wird.

Wie üblich besteht der PID - Regler 1 aus einem proportionalen P-Zweig, der den Eingang des PID - Reglers 1 mit einem P-Verstärkungsfaktor Kp multipliziert auf den Ausgang des PID - Reglers 1 schaltet, aus einem zeitlich integrierenden I-Zweig, der den Eingang mit einem I-Verstärkungsfaktor Ki multipliziert und zeitlich integriert auf den Ausgang schaltet, sowie einem ableitenden D-Zweig, der den Eingang zeitlich ableitet und mit einem D-Verstärkungsfaktor Kd multipliziert auf den Ausgang schaltet. Der Ausgang des PID - Reglers 1 wird damit aus der Summe des P-, I- und D-Zweiges gebildet.

Die drei genannten Verstärkungsfaktoren werden im Folgenden auch kurz als Kp, Ki und Kd bezeichnet.

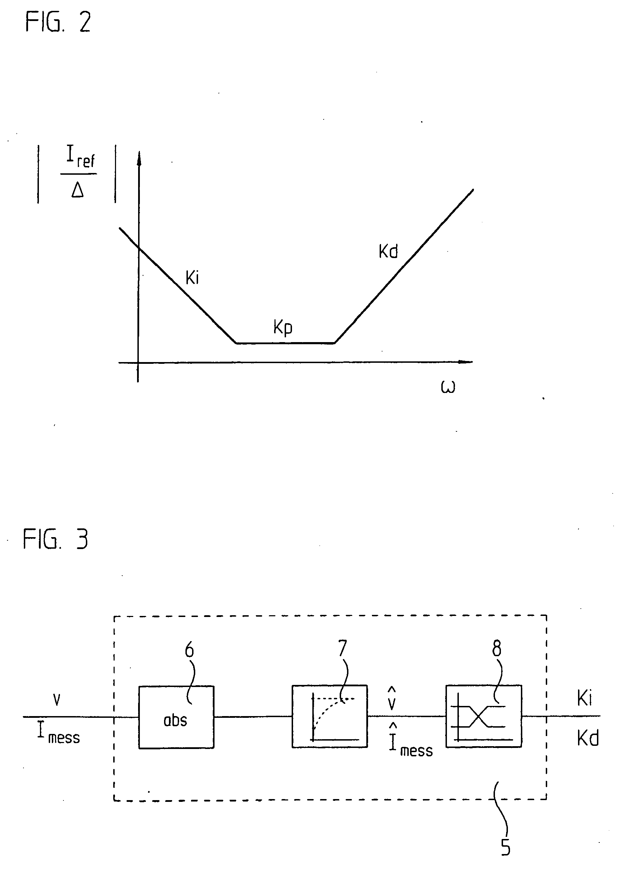

Figur 2 zeigt die Übertragungsfunktion des PID - Reglers 1 als Bode - Diagramm. Es gilt

$$PID(j\omega) = Iref(j\omega)/\Delta(j\omega) = Ki*1/j\omega + Kp + Kd*j\omega$$

Damit ist PID(jω) ungefähr gleich Ki*1/jω für kleine Frequenzen ω, und ungefähr gleich Kd*jω für große Frequenzen ω.

Da nun die mechanische Übertragungsfunktion des Regelkreises 2 eine Geschwindigkeitsabhängigkeit gerade in dem Bereich zeigt, in dem PID(jω) ungefähr gleich Ki*1/jω ist, und der Stromregelkreis 3 eine Lastabhängigkeit gerade in dem Bereich aufweist, in dem PID(jω) ungefähr gleich Kd*jω ist, wird vorgeschlagen, diese beiden Nichtlinearitäten durch eine geschwindigkeits- bzw. lastabhängige Anpassung von Kd und Ki zu kompensieren.

Die Anpassung von Kd und Ki wird von der oben bereits erwähnten Parametrierungseinheit 5 vorgenommen. Eine solche Parametrierungseinheit 5 kann in Hardware aufgebaut sein, oder - wie die ganze Reglerstruktur - in Software abgebildet sein. Die Parametrierungseinheit 5 hat die Aufgabe, aus der Geschwindigkeit v des Antriebs und dem im Antrieb gemessenen Antriebsstrom Imess geeignete Verstärkungsfaktoren Kd und Ki für den PID - Regler 1 abzuleiten. Hierzu muss im vorliegenden Ausführungsbeispiel zunächst aus der zeitlichen Änderung des Lageistwerts Xmess eine Antriebsgeschwindigkeit v abgeleitet werden, da die Antriebsgeschwindigkeit v nicht direkt gemessen wird. Liegen die Zustandsgrößen Geschwindigkeit v und der gemessene Antriebsstrom Imess vor, werden Ki und Kd gemäß der Figur 3 hergeleitet.

Gemäß der Figur 3 werden in der Parametrierungseinheit 5 die Zustandsgrößen v und Imess zunächst durch je einen Absolutwertbildner 6 geleitet, um deren Absolutwerte zu bilden. Weder für die Reibungseffekte noch für die Sättigungseffekte spielt nämlich das Vorzeichen der jeweiligen Zustandsgröße v, Imess eine Rolle. Ki und Kd werden daher unabhängig von einem solchen Vorzeichen festgelegt. Dann werden beide Zustandsgrößen v, Imess von je einem Filter 2. Ordnung 7 gefiltert. Ein solcher Filter 7 hat die Aufgabe, sehr schnelle Änderungen der jeweiligen Zustandsgröße zeitlich zu verzögern, um letztlich eine zu schnelle Änderung der Verstärkungsfaktoren Kd, Ki zu vermeiden. Diese Vorbehandlung der Zustandsgrößen v und Imess ist vorteilhaft, aber nicht zwingend notwendig.

Die so vorbereiteten Zustandsgrößen, die im folgenden auch mit v' und I'mess bezeichnet sind, werden dann je einer Zuordnungseinheit 8 zugeführt, die der jeweiligen Zustandsgröße v', I'mess einen Verstärkungsfaktor Ki, Kd zuweist. Dieser Verstärkungsfaktor Ki, Kd wird dann im PID - Regler 1 verwendet.

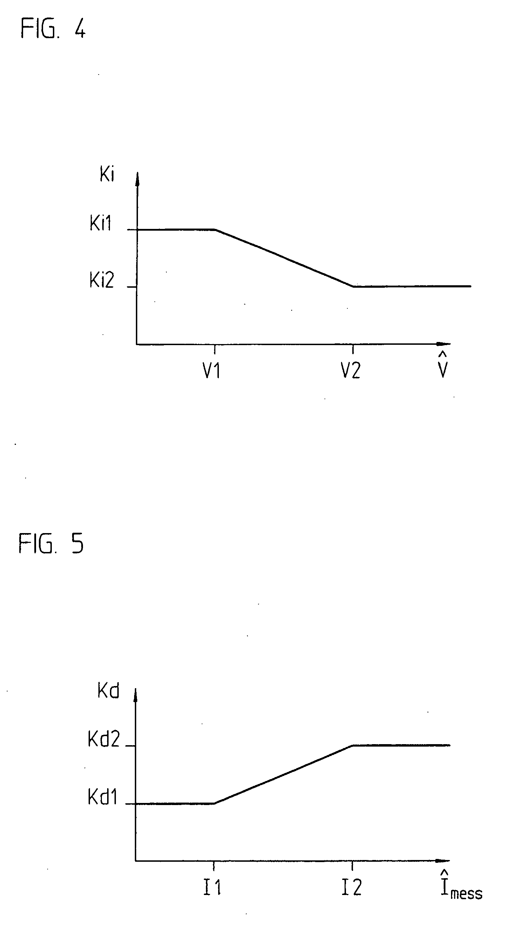

Die Figur 4 zeigt ein Beispiel für die Zuordnung eines Wertes für Ki abhängig von der Antriebsgeschwindigkeit v', wie sie in der Zuordnungseinheit 8 für Ki verwendet werden kann. Unterhalb einer ersten Grenzgeschwindigkeit v1 wird ein erster I-Verstärkungsfaktor Ki1 festgelegt, oberhalb einer zweiten Grenzgeschwindigkeit v2 wird ein zweiter I-Verstärkungsfaktor Ki2 festgelegt. Ki2 ist dabei kleiner als Ki1. Zwischen den beiden Grenzgeschwindigkeiten v1 und v2 wird ein kontinuierlicher, vorzugsweise linearer Übergang festgelegt. In diesem Bereich fällt Ki mit der Antriebsgeschwindigkeit v'.

Eine lineare Interpolation zwischen den Wertepaaren v1, Ki1 und V2, Ki2 lässt sich besonders einfach berechnen. Alternativ können für den Übergang auch verschiedenste mathematische Funktionen verwendet werden, die einen stetigen Übergang von Ki1 auf Ki2 definieren.

Die Figur 5 zeigt ein Beispiel für die Zuordnung eines Wertes für Kd abhängig vom Antriebsstrom I'mess, wie sie in der Zuordnungseinheit 8 für Kd verwendet werden kann. Ein wesentlicher Unterschied zur Figur 4 besteht darin, dass Kd unterhalb vom ersten Grenzantriebsstrom I1 kleiner ist als oberhalb des zweiten Grenzantriebsstromes I2. Der Übergang zwischen beiden Grenzantriebsströmen I1, 12 ist wieder kontinuierlich und vorzugsweise linear ausgestaltet. In diesem Bereich steigt Kd mit dem Antriebsstrom I'mess.

Lediglich beispielhaft seinen Zahlenwerte angegeben:

v1 = 2μm/s, Ki1 = 300, v2 = 20μm/s, Ki2 = 200

I1 = 1.8A, Kd1 = 1250, I2 = 2.4A, Kd2 = 2000

Die praktische Umsetzung der Zuordnungseinheit 8 kann auch über Look-Up - Tabellen für Ki und Kd erfolgen, in der für eine Anzahl von Geschwindigkeiten v, V' bzw. Antriebsströmen Imess, Imess' passende Verstärkungsfaktoren Ki bzw. Kd eingetragen sind. Zwischenwerte können bei Bedarf interpoliert werden.

Das vorstehend beschriebene Verfahren zum Anpassen von Reglerparametern Kd, Ki hat sich im Zusammenspiel von linearen oder rotatorischen Direktantrieben mit der in der Figur 1 dargestellten Reglerstruktur bestens bewährt. Sowohl im Bereich kleiner Geschwindigkeiten und im Bereich hoher Last bzw. hoher Antriebsströme ergeben sich signifikante Verbesserungen in der Bandbreite und Regelgüte. Abhängig von der jeweiligen Anwendung mag es auch genügen, nur einen der beiden Verstärkungsfaktoren Ki, Kd wie oben beschrieben anzupassen.

## Patentansprüche

1. Verfahren zum Anpassen von Reglerparametern eines Antriebs an unterschiedliche Betriebszustände, wobei ein Regelkreis (2) des Antriebs einen PID - Regler (1) enthält, dessen I-Verstärkungsfaktor (Ki) an eine Antriebsgeschwindigkeit (v, v') angepasst wird, und dessen D-Verstärkungsfaktor (Kd) an einen Antriebsstrom (Imess, I'mess) und damit an eine Antriebslast angepasst wird, **dadurch gekennzeichnet dass** anhand der Antriebsgeschwindigkeit (v, v') der I-Verstärkungsfaktor (Ki) und anhand des Antriebsstromes (Imess, I'mess) der D-Verstärkungsfaktor (Kd) festgelegt und im PID - Regler (1) verwendet werden, wobei zumindest in jeweils einem Bereich der I-Verstärkungsfaktor (Ki) mit der Antriebsgeschwindigkeit (v, v') fällt und der D-Verstärkungsfaktor (Kd) mit dem Antriebsstrom (Imess, I'mess) steigt, und dass unterhalb eines ersten Grenzantriebsstromes (I1) ein erster D-Verstärkungsfaktor (Kd1) festgelegt wird, dass oberhalb eines zweiten Grenzantriebsstromes (I2) ein zweiter D-Verstärkungsfaktor (Kd2) festgelegt wird, der größer ist als der erste D-Verstärkungsfaktor (Kd1), und dass zwischen den beiden Grenzströmen (Imess1, Imess2) ein kontinuierlicher, insbesondere linearer Übergang zwischen dem ersten und zweiten D-Verstärkungsfaktor (Ki1, Ki2) festgelegt wird.

2. Verfahren nach Anspruch 1, **dadurch gekennzeichnet, dass** von der Antriebsgeschwindigkeit (v) und vom Antriebsstrom (Imess) jeweils der Absolutwert gebildet wird, um die Verstärkungsfaktoren (Ki, Kd) zu bestimmen.

3. Verfahren nach Anspruch 1 oder 2, **dadurch gekennzeichnet, dass** die Antriebsgeschwindigkeit (v) und der Antriebsstrom (Imess) jeweils einen Filter zweiter Ordnung (7) durchlaufen, um schnelle Änderungen zeitlich zu verzögern.

4. Verfahren nach einem der vorhergehenden Ansprüche, **dadurch gekennzeichnet, dass** unterhalb einer ersten Grenzgeschwindigkeit (v1) ein erster I-Verstärkungsfaktor (Ki1) festgelegt wird, dass oberhalb einer zweiten Grenzgeschwindigkeit (v2) ein zweiter I-Verstärkungsfaktor (Ki2) festgelegt wird, der kleiner ist als der erste I-Verstärkungsfaktor (Ki1), und dass zwischen den beiden Grenzgeschwindigkeiten (v1, v2) ein kontinuierlicher, vorzugsweise linearer Übergang zwischen dem ersten und zweiten I-Verstärkungsfaktor (Ki1, Ki2) festgelegt wird.

5. Verfahren nach einem der vorhergehenden Ansprüche, **dadurch gekennzeichnet, dass** die Festlegung der Verstärkungsfaktoren (Kd, Ki) in je einer Zuordnungseinheit (8) erfolgt, die mit Look-Up - Tabellen arbeitet.

6. Verfahren nach einem der vorhergehenden Ansprüche, **dadurch gekennzeichnet, dass** die Festlegung der Verstärkungsfaktoren (Kd, Ki) in je einer Zuordnungseinheit (8) erfolgt, die mit mathematischen Funktionen arbeitet.

7. Verfahren nach einem der vorhergehenden Ansprüche, **dadurch gekennzeichnet, dass** der PID - Regler (1) ein Lageregler ist, der aus einer Lageabweichung ($\Delta$) einen Sollstrom (Iref) bildet, der einem Stromregler (3) zugeführt wird.

8. Verfahren nach einem der vorhergehenden Ansprüche, **dadurch gekennzeichnet, dass** der I-Verstärkungsfaktor (Ki) an die Antriebsgeschwindigkeit (v) angepasst wird oder der D-Verstärkungsfaktor (Kd) an den Antriebsstrom (Imess) angepasst wird.

## Claims

1. A method for the adaptation of control parameters of a drive to different operating conditions, a control loop (2) of the drive containing a PID-controller (1), the I-gain factor (Ki) thereof being adapted to a drive velocity (v, v'), and the D-gain factor (Kd) thereof being adapted to a drive current (Imess, I'mess) and thus to a drive load, **characterised**

**in that** the I-gain factor (Ki) is determined using the drive velocity (v, v') and the D-gain factor (Kd) is determined using the drive current (Imess, I'mess) and used in the PID-controller (1), at least in one respective range the I-gain factor (Ki) falling with the drive velocity (v, v') and the D-gain factor (Kd) rising with the drive current (Imess, I'mess) and **in that** a first D-gain factor (Kd1) is determined below a first limit drive current (I1), **in that** a second D-gain factor (Kd2) is determined above a second limit drive current (12), said D-gain factor being greater than the first D-gain factor (Kd1) and **in that** between the two limit currents (Imess1, Imess2) a continuous, in particular linear, transition is determined between the first and second D-gain factor (Ki1, Ki2).

2. The method according to Claim 1, **characterised in that** in each case the absolute value is formed from the drive velocity (v) and from the drive current (Imess) in order to determine the gain factors (Ki, Kd).

3. The, method according to Claim 1 or 2, **characterised in that** the drive velocity (v) and the drive current (Imess) in each case pass through a second-order filter (7), in order to time-delay rapid changes.

4. The method according to one of the preceding claims, **characterised in that** a first I-gain factor (Ki1) is determined below a first limit velocity (v1), **in that** a second I-gain factor (Ki2) is determined above a second limit velocity (v2), said second I-gain factor being smaller than the first I-gain factor (Ki1), and **in that** between the two limit velocities (v1, v2) a continuous, preferably linear, transition is determined between the first and the second I-gain factor (Ki1, Ki2).

5. The method according to one of the preceding claims, **characterised in that** the determination of the gain factors (Kd, Ki) takes place in one respective assignment unit (8), which operates by means of look-up tables.

6. The method according to one of the preceding claims, **characterised in that** the determination of the gain factors (Kd, Ki) takes place in one respective assignment unit (8), which operates by means of mathematical functions.

7. The method according to one of the preceding claims, **characterised in that** the PID-controller (1) is a position controller, which forms from a position deviation (Δ) a setpoint current (Iref) which is supplied to a current controller (3).

8. The method according to one of the preceding claims, **characterised in that** the I-gain factor (Ki) is adapted to the drive velocity (v) or the D-gain factor (Kd) is adapted to the drive current (Imess).

**Revendications**

1. Procédé d'adaptation de paramètres de régulation d'un entraînement à des états de fonctionnement différents, dans lequel un circuit de régulation (2) de l'entraînement contient un régulateur PID (1), dont un facteur d'amplification I (Ki) est adapté à une vitesse d'entraînement (v,v'), et dont un facteur d'amplification D (Kd) est adapté à un courant d'entraînement (Imess, I'mess)) et donc à une charge d'entraînement, **caractérisé en ce que** sur la base de la vitesse d'entraînement (v,v') la facteur d'amplification I (Ki) est déterminé et sur la base du courant d'entraînement (Imess, I'mess) le facteur d'amplification D (Kd) est déterminé et sont utilisés dans le régulateur PID (1), dans lequel au moins dans respectivement une plage la facteur d'amplification I (Ki) baisse avec la vitesse d'entraînement (v ; v') et le facteur d'amplification D (Kd) augmente avec le courant d'entraînement (Imess, I'mess), et **en ce que** en dessous d'un premier courant d'entraînement de limite (I1) un premier facteur d'amplification D (Kd1) est déterminé, **en ce que** au dessus d'un deuxième courant d'entraînement de limite (12) un deuxième facteur d'amplification D (Kd2) est déterminé, qui est plus grand que la premier facteur d'amplification D (Kd1), et **en ce que** entre les deux courants de limite (Imess1, Imess2) une transition continue, notamment linéaire entre le premier et le deuxième facteur d'amplification D (Ki1, Ki2) est déterminée.

2. Procédé selon la revendication 1, **caractérisé en ce que** à partir de la vitesse d'entraînement (v) et du courant d'entraînement (Imess), la valeur absolue respective est formée, afin de déterminer les facteurs d'amplification (Ki, Kd).

3. Procédé selon la revendication 1 ou 2, **caractérisé en ce que** la vitesse d'entraînement (v) et la courant d'entraînement (Imess) passent respectivement par un filtre de deuxième ordre (7), afin de retarder temporellement les variations rapides.

4. Procédé selon une des revendications précédentes, **caractérisé en ce que** en dessous d'une première vitesse de limite (v1) un premier facteur d'amplification I (Ki1) est déterminé, **en ce que** au dessus d'une deuxième vitesse de limite (v2) un deuxième facteur d'amplification I (Ki2) est déterminé, qui est plus petit que le premier facteur d'amplification I (Ki1) et **en ce que** entre les deux vitesse de limite (v1, v2) une transition continue, de préférence linéaire entre le premier et le deuxième facteur d'amplification I (Ki1, Ki2) est déterminée.

5. Procédé selon une des revendications précédentes, **caractérisé en ce que** la détermination des facteurs d'amplification (Kd, Ki) a lieu dans respectivement une unité d'affectation (8), qui fonctionne avec des tables de recherche.

6. Procédé selon une des revendications précédentes, **caractérisé en ce que** la détermination des facteurs d'amplification (Kd, Ki) a lieu dans respectivement une unité d'affectation, qui fonctionne avec des fonctions mathématiques.

7. Procédé selon une des revendications précédentes, **caractérisé en ce que** le régulateur PID (1) est un régulateur de position, qui forme à partir d'un écart de position ($\Delta$) un courant de consigne (Iref), qui est introduit dans un régulateur de courant (3).

8. Procédé selon une des revendications précédents, **caractérisé en ce que** le facteur d'amplificateur I (Ki) est adapté à la vitesse d'entraînement (v) ou le facteur d'amplification D (Kd) est adapté au courant d'entraînement (Imess).

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5006770 A
- EP 0728929 A